# EUROPÄISCHE PATENTSCHRIFT

(11) **EP 3 465 173 B1**
(45) Veröffentlichungstag und Bekanntmachung des Hinweises auf die Patenterteilung: **28.05.2025**
(21) Anmeldenummer: 17720087.0
(22) Anmeldetag: 26.04.2017
(51) Int. Cl.: G01N 21/90, G01N 21/88

(54) **VORRICHTUNG UND VERFAHREN ZUR INSPEKTION VON BEHÄLTNISSEN**
APPARATUS AND METHOD FOR INSPECTING CONTAINERS
DISPOSITIF ET PROCÉDÉ D'INSPECTION DE RÉCIPIENTS

(30) Priorität: 02.06.2016 DE 102016209722
(43) Veröffentlichungstag der Anmeldung: 10.04.2019
(73) Patentinhaber: Syntegon Technology GmbH, 71332 Waiblingen (DE)
(72) Erfinder: BAUER, Erich, 74564 Crailsheim (DE); NIELSEN, Henrik Moeller, 4700 Naestved (DK)
(74) Vertreter: Novagraaf Group
(86) Internationale Anmeldenummer: PCT/EP2017/059903
(87) Internationale Veröffentlichungsnummer: WO 2017/207175

(56) Entgegenhaltungen:
- WO-A1-94/08230
- JP-A- H0 792 108
- US-A- 4 915 237

## Beschreibung

Die Erfindung geht aus von einer Vorrichtung und einem Verfahren zur Inspektion von Behältnissen nach der Gattung der unabhängigen Ansprüche. Eine gattungsgemäße Vorrichtung ist bekannt aus der US 7,560,720 B2. Dort werden Behältnisse über eine Zuführung und eine Transportschnecke unterschiedlichen Transporträdern zugeführt. Schließlich gelangen die zu inspizierenden Behältnisse in ein Karussell, in dessen Zentrum mehrere Kameras angeordnet sind. Reflektoren sind in geeigneter Weise angeordnet, so dass die Kameras die Behältnisse inspizieren können. Alternativ können auch zwei Kameras zur Inspektion unterschiedlicher Bereiche eines einzigen Behältnisses vorgesehen sein. Aus der WO 94/08230 A1 ist ein Verfahren zur Inspektion transparenter Behältnisse und darin enthaltener Flüssigkeiten bekannt. Lichtquellen durchstrahlen das Behältnis quer bzw. parallel zur Längsachse des Behältnisses. Ein gattungsgemäßer Stand der Technik ist auch in der JP H0792108 A gezeigt.

Der Erfindung liegt die Aufgabe zugrunde, das System weiter zu verbessern.

Diese Aufgabe wird gelöst durch die Merkmale der unabhängigen Ansprüche.

### Vorteile der Erfindung

Die erfindungsgemäße Vorrichtung und das erfindungsgemäße Verfahren zur Inspektion von Behältnissen gemäß den Merkmalen der unabhängigen Ansprüche haben demgegenüber den Vorteil, dass die Genauigkeit der Inspektion erhöht wird. Zum einen wird hierzu die Inspektionsdauer erweitert. Außerdem wird die Fehlerrate reduziert, die durch Beleuchtungsinterferenzen benachbarter Systeme entstehen, indem der Phasenwechsel benachbarter Inspektionssysteme synchronisiert wird. Durch die Verwendung unterschiedlicher Beleuchtungsarten können Fremdpartikel noch zuverlässiger detektiert werden. So wird erfindungsgemäß eine weitere Lichtquelle hinzugefügt, die insbesondere reflektierende Fremdpartikel sicher detektiert und als Reflexionslicht bezeichnet wird. Dadurch dass das Reflexionslicht so angeordnet ist, dass dessen Strahlengang mit einem anderen Winkel als der Strahlengang des Durchlichts auf das Behältnis auftrifft, können anhand so hervorgerufener Reflexionen der Fremdpartikel diese mit höherer Wahrscheinlichkeit erkannt werden. Erfindungsgemäß ist vorgesehen, dass aus zumindest einem von der Kamera zu einem bestimmten Zeitpunkt aufgenommenem Bild zumindest ein Teilbild, das die Fläche eines ersten Behältnisses umfasst, und ein weiteres Teilbild, das die Fläche eines zweiten Behältnisses umfasst, extrahiert wird. Damit können Bildsequenzen für zwei Behältnisse mit lediglich nur einer Kamera erstellt werden. Die Zuordnung der Teilbilder zu den Bildsequenzen kann über eine Bildverarbeitungssoftware vorgenommen werden, beispielsweise in Verbindung mit der Behältniskontur oder anhand bekannter Bewegungsabläufe des Behältnisses.

In einer zweckmäßigen Weiterbildung ist vorgesehen, dass das Reflexionslicht und das Durchlicht zu unterschiedlichen Zeitpunkten eingeschaltet sind, vorzugsweise abwechselnd. Dadurch können gegenseitige Störungen reduziert werden, was die Genauigkeit der Vorrichtung weiter erhöht. Besonders bevorzugt kann die Beleuchtung bzw. die Kamera verschiedener Inspektionsmodule zu unterschiedlichen Zeitpunkten eingeschaltet werden. Dann können Störungen, die beispielsweise durch Reflexionen an der Vorrichtung hervorgerufen werden, reduziert werden. Es könnte beispielsweise vorkommen, dass Licht von der einen Station unbeabsichtigt auf den Kamerasensor einer weiteren Station trifft, sei es direkt oder durch Reflexionen an diversen Maschinenoberflächen, und somit das Bild der weiteren Stationen beeinträchtigt. Dies wird dadurch vermieden. So wird die Bildaufnahme der einzelnen Stationen, die sich potenziell beeinflussen könnten, im Stroboskopmodus so synchronisiert, dass die Bildaufnahme dieser Stationen immer zeitversetzt erfolgt. Somit wird eine störende Einwirkung ausgeschlossen, ohne beispielsweise mechanische Lichtabschirmung für jede einzelne Station einsetzen zu müssen. Erfindungsgemäß ist vorgesehen, dass dass Reflexionslicht und das Durchlicht so ausgebildet sind, dass zumindest zwei Behältnisse zugleich beleuchtbar sind. Die Auflösung der Inspektion kann sich verdoppeln, beispielsweise von 50 µm auf 25 µm.

In einer zweckmäßigen Weiterbildung ist vorgesehen, dass die Behältnisaufnahme und/oder das Rotationsmittel so ausgebildet ist, dass vor einer Inspektion durch die Kamera das Behältnis in Rotation versetzt wurde und zum Zeitpunkt der Inspektion abgebremst ist. Dadurch werden mögliche Fremdpartikel im Produkt in Bewegung versetzt, die dann sowohl im Durchlicht wie auch im Reflexionslicht zuverlässiger detektiert werden können.

In einer zweckmäßigen Weiterbildung ist vorgesehen, dass der Winkel des Durchlichts im Wesentlichen 90° beträgt und/oder der Winkel des Reflexionslichts in einem Bereich von 25° bis 50° liegt. In diesen Winkelbereichen ist eine besonders zuverlässige Detektion der Fremdpartikel mit unterschiedlichen Beleuchtungsarten möglich.

Besonders bevorzugt ist die Behältnisaufnahme relativ bewegbar gegenüber der Kamera und/oder einem Reflektor ausgebildet. In einer zweckmäßigen Weiterbildung ist zumindest ein weiteres Rad vorgesehen zur Zu- oder Abführung zumindest eines Behältnisses zu der Behältnisaufnahme. Damit können Inspektionen in hoher Geschwindigkeit durchgeführt werden.

Weitere zweckmäßige Weiterbildungen ergeben sich aus weiteren abhängigen Ansprüchen und der Beschreibung.

### Zeichnung

Ein Ausführungsbeispiel der Vorrichtung und des Verfahrens zur Inspektion von Behältnissen ist in der Zeichnung dargestellt und wird nachfolgend näher beschrieben.

Es zeigen:
Die Figur 1 eine perspektivische Ansicht der Gesamtvorrichtung, in der die Vorrichtung zur Inspektion eingesetzt wird,
die Figur 2 eine schematische Seitenansicht der Vorrichtung bei einer Inspektion im Durchlicht,
die Figur 3 eine schematische Seitenansicht der Vorrichtung bei einer Inspektion im Reflexionslicht sowie
die Figur 4 eine schematische Darstellung der unterschiedlichen Schritte bei der Inspektion.

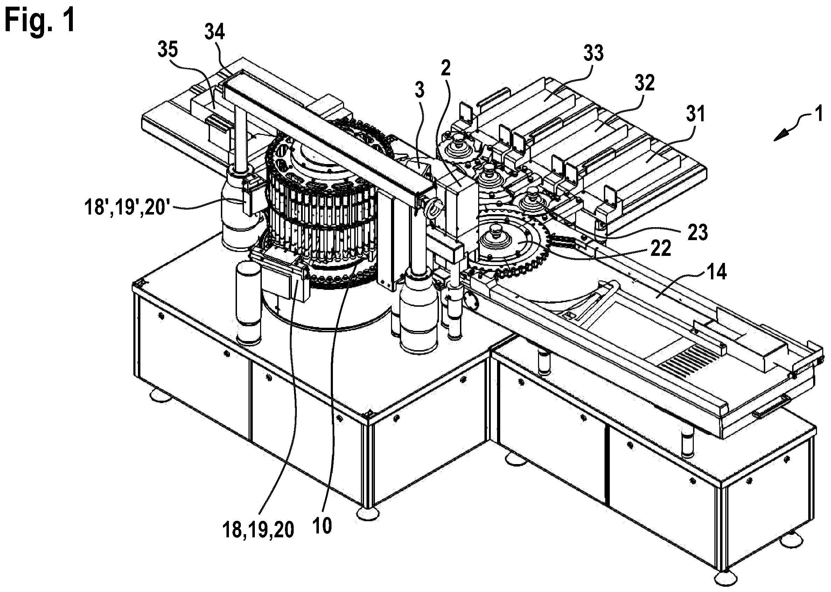

In Figur 1 ist eine perspektivische Ansicht einer Gesamtvorrichtung 1 gezeigt, welche eine Vorrichtung 10 zur Inspektion von Behältnissen 12 umfasst. Die Gesamtvorrichtung 1 umfasst zumindest eine Zuführung 14, über die die zu inspizierenden Behältnisse 12 zugeführt werden. Bei der Zuführung 14 handelt es sich beispielsweise um ein Zuführband, welches kontinuierlich genügend Behältnisse 12 in den Erfassungsbereich eines ersten Rades 22 bringt. Bei den Behältnissen 12 kann es sich beispielsweise um pharmazeutische Behältnisse handeln wie beispielsweise Ampullen, Vials, Flaschen, Karpulen oder Spritzen. Prinzipiell sind jedoch auch andere Behältnisse 12 möglich. Die Behältnisse 12 gelangen jeweils einzeln an ein erstes Rad 22, das als Transportrad die von der Zuführung 14 zugeführten Behältnisse 12 an der Außenseite des Rades 22 aufnimmt und weiteren Stationen bzw. Transporträdern zuführt. In dem ersten Transportrad 22 kann optional zugleich eine Vorinspektion 2 durchgeführt werden. Hierzu ist beispielsweise neben zumindest einer Beleuchtung eine Kamera stationär oberhalb der zu inspizierenden Behältnisse 12 angeordnet und führt geeignete, beispielsweise optische, Prüfungen durch. Lediglich für im Rahmen der Vorinspektion 2 für gut befundene Behältnisse 12 gelangen überhaupt in ein drittes Rad 24. Ansonsten kann bereits an dieser Stelle eine Ausschleusung über ein zweites Rad 23 in eine erste Ablage 31 erfolgen.

Das erste Rad 22 rotiert kontinuierlich und übergibt die entnommenen Behältnisse 12 über das weitere Rad 24 an die Vorrichtung 10 zur Inspektion von Behältnissen 12. Zwischen der Vorinspektion 2 und der Vorrichtung 10 zur Inspektion von Behältnissen 12 könnte bei dem dritten Rad 24 noch zumindest ein weiteres Inspektionsmodul 3 vorgesehen sein. Dieses Inspektionsmodul 3 könnte beispielsweise eine sogenannte kosmetische Inspektion des Behältnisses 12 durchführen. Auch dieses weitere Inspektionsmodul 3 könnte beispielsweise auf optischen Prinzipien unter Verwendung einer Beleuchtung und einer Kamera basieren. Weitere Inspektionen sind je nach Bedarf möglich.

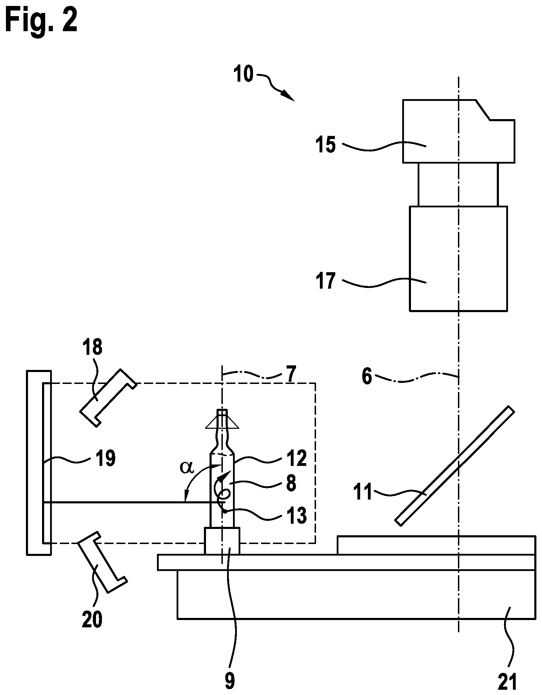

Die Vorrichtung 10 ist beispielsweise als Inspektionskarussell ausgebildet. Die Vorrichtung 10 ist hierbei im Wesentlichen zylinderförmig und dreht sich im Ausführungsbeispiel im Uhrzeigersinn. In der Vorrichtung 10 erfolgt die Überprüfung der zugeführten Behältnisse 12 unter Verwendung einer bestimmten Beleuchtung 18, 19, 20 und einer oder mehrerer Kamera(s) 15, was in den nachfolgenden Figuren 2 bis 4 noch näher ausgeführt wird. Die Vorrichtung 10 bewegt die Behältnisse 12 im Uhrzeigersinn von dem Erfassungsbereich einer ersten Beleuchtung 18, 19, 20 in den Erfassungsbereich einer optionalen weiteren Beleuchtung 18', 19', 20'. Hier kann eine Verifikation des vorherigen Inspektionsablaufs vorgenommen werden. Die Vorrichtung 10 umfasst einen sich drehenden Inspektionstisch, der scheibenförmig ausgebildet ist und an dem die Behältnisse 12 gehalten werden. In der Mitte der Vorrichtung 10 befindet sich zumindest eine Kamera 15 und/oder zumindest ein Reflektor 11, die feststehend gegenüber dem Inspektionstisch angeordnet ist/sind.

Die inspizierten Behältnisse 12 werden über weitere nicht eigens bezeichnete Räder bzw. Transporträder von der Vorrichtung 10 je nach detektiertem Zustand des Behältnisses 12 unterschiedlichen Ablagen 31 - 35 zugeführt.

In Figur 2 ist die Vorrichtung 10 zur Inspektion von Behältnissen 12 noch genauer gezeigt. Das zu inspizierende Behältnis 12 befindet sich in einer Behältnisaufnahme 21, vorzugsweise ein Drehtisch, Rad oder Sternrad. Die Behältnisaufnahme 21 nimmt Behältnisse 12 mechanisch auf im Rahmen eines Transportvorgangs. Die Behältnisaufnahme 21 bewegt bzw. dreht sich nach erfolgter optischer Inspektion weiter, so dass das nächste zu inspizierende Behältnis 12 in den Erfassungsbereich einer Kamera 15 gelangt.

Die Behältnisaufnahme 21 umschließt das Behältnis 12 zumindest teilweise beispielsweise im Bereich des Kopfes. Am Boden des Behältnisses 12 befindet sich ein Aufnahmemittel 9. Beispielsweise dieses Aufnahmemittel 9 kann das darauf befindliche Behältnis 12 um die Rotationsachse bzw. Behältnisachse 7 des Behältnisses 12 drehen, vorzugsweise erfolgt eine Drehung um das Vielfache von 360°, insbesondere bei einer Hochgeschwindigkeitsdrehung.

Das Behältnis 12 ist vorzugsweise rotationssymmetrisch ausgebildet. Das Behältnis 12 weist eine Behältnisachse 7 auf. Die Behältnisachse 7 verläuft vorzugsweise parallel zur Rotationsachse eines rotationssymmetrischen Behältnisses 12 bzw. parallel zur Längsachse eines Behältnisses 12, wobei die Längsachse vom Kopf bis zum Boden des Behältnisses 12 verläuft. Das Behältnis 12 ist lichtdurchlässig. Es enthält ein Produkt 8, vorzugsweise eine Flüssigkeit bzw. ein flüssiges Pharmazeutikum. Schematisch dargestellt ist ein Fremdpartikel 13. Das in dem Behältnis 12 befindliche Produkt 8 soll auf seinen ordnungsgemäßen Zustand hin untersucht werden, beispielsweise dass sich keine unzulässigen Fremdpartikel 13 darin befinden. Das Produkt 8 wird hierzu mit verschiedenen Lichtquellen 18, 19, 20 durchleuchtet, das entstehende Bild durch eine Kamera 15 aufgenommen und anschließend ausgewertet. Aufgrund einer Rotation des Behältnisses 12 um seine Behältnisachse 7 und plötzliches Stoppen der Rotation bewegt sich das Produkt 8 und damit auch das Fremdpartikel 13 noch weiter - bei stillstehendem Behältnis 12 - wie mit einem entsprechenden Pfeil angedeutet. Unter anderem ein solches Fremdpartikel 13 soll wie nachfolgend beschrieben detektiert werden.

Oberhalb des Behältnisses 12, jedoch etwas seitlich versetzt, ist eine Kamera 15 mit einem Objektiv 17 angeordnet. Die Kamera 15 weist eine optische Achse 6 auf, die parallel und beanstandet zur Behältnisachse 7 verläuft. Die optische Achse 6 der Kamera 15 verläuft in etwa durch die Mitte des Objektivs 17. Die Kamera 15 ist so positioniert, dass die optische Achse 6 auf die Mitte eines Reflektors 11 trifft. Der Reflektor 11 ist gegenüber der optischen Achse 6 geneigt angeordnet, vorzugsweise um 45°. Er dient dazu, einen Strahlengang eines Durchlichts 19 an die Kamera 15 weiterzuleiten. Der Reflektor 11 wird insbesondere eingesetzt, um den Strahlengang des Objektivs 17 mit einem relativ großen Arbeitsabstand umzulenken und somit den optischen Aufbau auf dem Inspektionskarussell platzsparend unterzubringen.

Das Durchlicht 19 erzeugt einen im Wesentlichen senkrecht zur optischen Achse 6 und/oder Behältnisachse 7 gerichteten Strahlengang mit einem Winkel α, ist also seitlich auf das Behältnis 12 gerichtet. Das Durchlicht 19 erstreckt sich vorzugsweise parallel zur Behältnisachse 7 entlang des Behältnisses 12, um zuverlässig den kompletten Bereich des Behältnisses 12 seitlich zu durchleuchten. Im Ausführungsbeispiel ist das Durchlicht 19 außerhalb der Behältnisaufnahme 21 auf der Höhe des Reflektors 11 angeordnet, wobei das Behältnis 12 zwischen Durchlicht 19 und Reflektor 11 angeordnet ist. Dadurch kann das Durchlicht 19 das komplette Volumen des Behältnisses 12 sicher durchleuchten.

Außerdem ist als weitere Lichtquelle zumindest ein Reflexionslicht 18 vorgesehen. Im Ausführungsbeispiel ist noch ein weiteres Reflexionslicht 20 angeordnet. Das eine Reflexionslicht 18 ist etwas oberhalb von dem Behältnis 12 so angeordnet, dass der erzeugte Strahlengang mit einem bestimmten Winkel β gegenüber der Behältnisachse 7 und/oder gegenüber dem Strahlengang des Durchlichts 19 geneigt ist, beispielsweise um 45° mit einer geeigneten Bandbreite. Das weitere Reflexionslicht 20 ist etwas unterhalb von dem Behältnis 12 so angeordnet, dass der erzeugte Strahlengang ebenfalls mit einem gewissen Winkel β gegenüber der Behältnisachse 7 und/oder gegenüber dem Strahlengang des Durchlichts 19 geneigt ist, beispielsweise ca. 30° zur Horizontalen. Wesentlich bei der Anordnung des Reflexionslichts 18, 20 ist, dass beide Beleuchtungen die Flüssigkeit bzw. das Produkt 8 optimal ausleuchten. Hierzu ist beispielsweise das untere Reflexionslicht 20 so anzuordnen, dass der zugehörige Strahlengang gerade oberhalb des Aufnahmemittels 9 bzw. der Behältnisaufnahme 21 verläuft. Gleichzeitig soll der Strahlengang des oberen Reflexionslichts 18 den Boden des Behältnisses 12 gut ausleuchten. Außerdem sollen beide Reflexionslichter 18,20 den Strahlengang des Durchlichts 19 nicht unnötig abdecken.

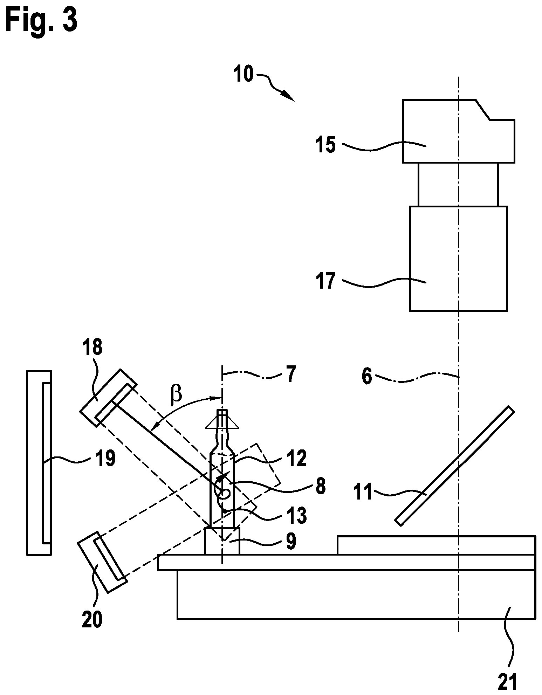

Die Breite der Reflexionslichter 18, 20 ist hierbei so gewählt, dass die komplette Längsseite zumindest des Korpus des Behältnisses 12 beleuchtet wird wie in Figur 3 angedeutet ist. Der Strahlengang des Reflexionslichts 18, 20 ist so gewählt, dass er nicht auf den Reflektor 11 trifft und auch nicht direkt mit der Kamera 15 abgebildet wird. Im Normalfall erscheint das Behältnis 12 dunkel in einem Reflexionsbild. Trifft dagegen das Reflexionslicht 18,20 auf ein möglicherweise vorhandenes reflektierendes Fremdpartikel 13 (bzw. auf den Meniskusbereich der Flüssigkeit), so reflektiert das Fremdpartikel 13 (bzw. der Meniskus) das Licht bzw. das Reflexionslicht 18,20 in alle Richtungen, also auch in Richtung der Kamera 15. Das Fremdpartikel 13 (bzw. der Meniskus) erscheint in dem Bild als ein helles Objekt auf einem dunklen Hintergrund. Ein Fremdpartikel 13 könnte eventuell nun das Reflexionslicht 18, 20 auch in Richtung des Reflektors 11 reflektieren, was die Kamera 15 als Bild zur weiteren Auswertung aufnimmt. Die Reflexionslichter 18, 20 sind so angeordnet, dass sie sich nicht im Strahlengang des Durchlichts 19 befinden. Das Reflexionslicht 18, 20 ist so angeordnet, dass der Strahlengang des Reflexionslichts 18, 20 einen gegenüber dem Durchlicht 19 unterschiedlichen (mit unterschiedlichem AuftreffWinkel β auf das Behältnis 12) Strahlengang aufweist. Das Reflexionslicht 18, 20 beleuchtet das Behältnis 12 so, dass quasi ein Dunkelfeld-Bild erzeugt wird, das die Kamera 15 erfasst und in diesem Bild ein mögliches Fremdpartikel 13 als ein helles Objekt auf dunklem Hintergrund erscheint. Dadurch wird die Zuverlässigkeit des Systems verbessert.

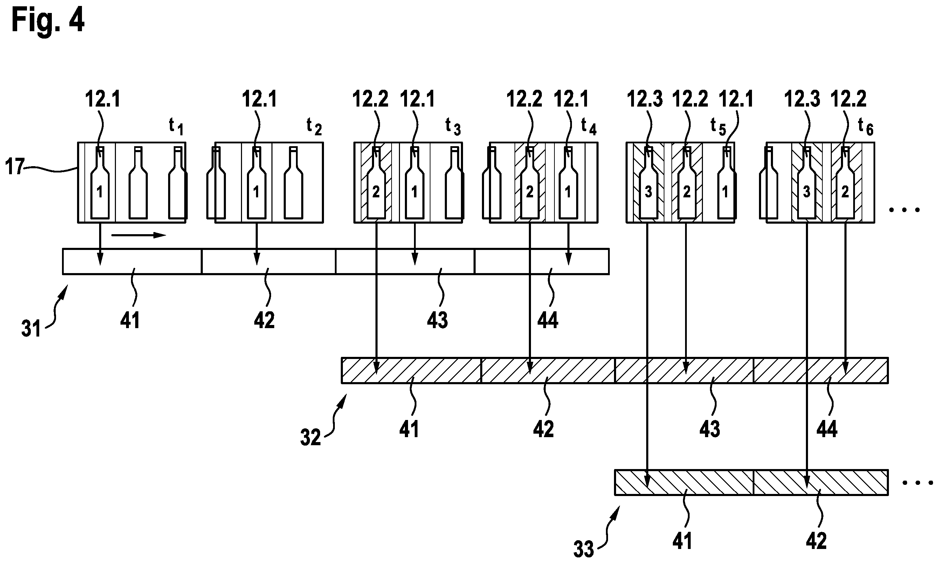

Die beschriebene Vorrichtung 10 zur Inspektion arbeitet wie folgt. Die mit Flüssigkeit bzw. Produkt 8 befüllten transparenten Behältnisse 12 - nachfolgend sind in Figur 4 zumindest drei Behältnisse exemplarisch 12.1, 12.2, 12.3 gezeigt - gelangen in das Inspektionskarussell. Dort werden sie durch die jeweilige Behältnisaufnahme 21 in einer aufrechten Position gehalten, indem die Spitze und/oder der Boden des Behältnisses 12 gehalten wird. Jedes Behältnis 12 wird rotiert entweder in oder gegen Uhrzeigerrichtung mit einer hohen Geschwindigkeit entsprechend eines vordefinierten Rotationsprofils. Dadurch werden auch mögliche Fremdpartikel 13 mit dem Produkt 8 in Bewegung versetzt, indem sowohl die Flüssigkeit bzw. das Produkt 8 als auch mögliche Fremdpartikel 13 zusammen mit dem Behältnis 12 rotieren. Das Behältnis 12 wird abrupt abgebremst, so dass zu dem Zeitpunkt, wenn das Behältnis 12 in ein Gesichtsfeld 17 der Kamera 15 gelangt, das Behältnis 12 nicht mehr rotiert, während die darin befindliche Flüssigkeit bzw. das Produkt 8 zusammen mit etwaigen Fremdpartikeln 13 noch mit hoher Geschwindigkeit rotiert.

In diesem Zustand wird nun eine Bildfolge des Behältnisses 12 aufgenommen unter alternierenden Beleuchtungsbedingungen wie in Figur 4 gezeigt, wenn sich das Behältnis 12 weiter im Gesichtsfeld der Kamera 15 bewegt. Im ersten Schritt werden Rohbilder im Vollbildformat aufgenommen, in welchen gleichzeitig mehrere Behältnisse 12.1,12.2 abgebildet sind. Aus jedem Rohbild werden anschließend zumindest zwei Bildsequenzen 31,32 wie weiter unten beschrieben gebildet.

Diese Bilder werden auf das Vorhandensein möglicher Fremdpartikel 13 oder sonstige Defekte durch eine entsprechende Bildverarbeitungssoftware analysiert. So könnten Fremdpartikel 13 beispielsweise im Durchlicht als dunkle Flecken, Fremdpartikel 13 im Reflexionslicht als helle Flecken detektiert werden. Weitere Prüfungen durch Vergleich der nacheinander aufgenommenen Bilder bezogen auf das jeweilige Behältnis 12 sind ebenfalls möglich. Werden Fremdpartikel 13 oder Defekte detektiert, werden die zugehörigen Behältnisse 12 als nicht akzeptiert klassifiziert, ansonsten als akzeptiert.

Entsprechend Figur 4 ist das Gesichtsfeld 17 der Kamera 15 rechteckförmig ausgebildet. Das Gesichtsfeld 17 besitzt eine Größe, so dass zuverlässig zumindest ein Ausschnitt von etwa zwei Maschinenteilungen (dies ist der Abstand zwischen zwei benachbarten Behältnissen 12.1,12.2) bzw. drei nebeneinander befindlicher Behältnisse 12 erfasst werden kann. Dadurch kann der Inspektionszeitraum vergrößert werden. Die Behältnisse 12 werden wie in Figur 3 beispielhaft dargestellt von links nach rechts durch das Gesichtsfeld 17 der Kamera 15 durch das Inspektionskarussell bzw. die zugehörige Behältnisaufnahme 21 transportiert. Figur 4 zeigt beispielhaft den Erhalt zweier kompletter Bildsequenzen 31, 32 betreffend der Behältnisse 12.1, 12.2. Eine dritte Bildsequenz 33 eines dritten Behältnisses 12.3 wurde begonnen, aber noch nicht fertiggestellt. Beispielhaft umfasst eine Bildsequenz 31, 32, 33 jeweils vier Bilder von demselben Behältnis 12, zwei Bilder im Durchlicht 19, zwei Bilder im Reflexionslicht 18, 20.

Zum Zeitpunkt t1 wird ein erstes zu inspizierendes Behältnis 12.1 in das Gesichtsfeld 17 der Kamera 15 gebracht. Zum Zeitpunkt t1 wird das Durchlicht 19 aktiviert. Das Reflexionslicht 18, 20 bleibt ausgeschaltet. Zum Zeitpunkt t1 befindet sich das Behältnis 12.1 in einer ersten Position 41. Zu diesem Zeitpunkt t1 bzw. in dieser Position 41 nimmt die Kamera 15 ein erstes Bild auf für die erste Sequenz 31, die das erste Behältnis 12.1 betrifft. Ein Teilbild, welches exakt den Bereich des Behältnisses 12.1 umfasst, wird von diesem Bild extrahiert und in die erste Sequenz 31 an der ersten Position 41 eingefügt.

Die Behältnisse 12 bewegen sich weiter von links nach rechts. Bei jedem weiteren Schritt bzw. weiteren Bild werden die Behältnisse 12.1, 12.2, 12.3, 12.n gleichmäßig von links nach rechts bewegt und kommen nacheinander ins Bild. Weiter. Zum Zeitpunkt t2 wird die Reflexionslicht 18, 20 eingeschaltet. Das Durchlicht 19 ist ausgeschaltet. Die Kamera 15 nimmt erneut ein Bild auf. Wiederum wird ein Teilbild, das die Fläche des Behältnisses 12.1 umfasst, extrahiert und in die erste Sequenz 31 an der zweiten Position 42 eingefügt. Als Teilbild wird beispielsweise ein Rechteck, dessen Größe in etwa der Größe des Behältnisses 12.1 entspricht, ausgeschnitten und in die erste Sequenz 31 eingefügt.

Die Behältnisse 12.1, 12.2, 12.3 bewegen sich weiter von links nach rechts. Zum Zeitpunkt t3 befindet sich neben dem ersten Behältnis 12.1 auch ein zweites Behältnis 12.2 im Gesichtsfeld 17 der Kamera 15. Zum Zeitpunkt t3 wird das Durchlicht 19 eingeschaltet und durchstrahlt beide Behältnisse 12.1, 12.2. Das Reflexionslicht 18, 20 ist ausgeschaltet. Die Kamera 15 nimmt ein Bild auf. Ein Teilbild, welches das erste Behältnis 12.1 umfasst, wird in die erste Sequenz 31 an einer dritten Position 43 eingefügt. Ein Teilbild, welches lediglich das zweite Behältnis 12.2 umfasst, wird in der zweiten Sequenz 32 an der ersten Position 41 eingefügt.

Zum Zeitpunkt t4 wird das Reflexionslicht 18, 20 angeschaltet. Das Durchlicht 19 ist ausgeschaltet. Die Kamera 15 nimmt ein Bild auf. Ein Teilbild, welches das erste Behältnis 12.1 umfasst, wird in die erste Sequenz 31 an einer vierten Position 44 eingefügt. Dies ist das letzte Teilbild der ersten Sequenz 31, bevor das erste Behältnis 12.1 das Gesichtsfeld 17 der Kamera 15 verlässt. Ein Teilbild des zweiten Behältnisses 12.2, das aus dem aufgenommen Bild extrahiert wird, wird in die zweite Sequenz 32 an der zweiten Position 42 eingefügt.

Zu den Zeitpunkten t5, t6, tn werden die Schritte entsprechend wiederholt und in den zugehörigen Sequenzen 32, 33 eingefügt. Hier ist ein drittes Behältnis 12.3 angedeutet, welches zum Zeitpunkt t5 in das Gesichtsfeld 17 der Kamera 15 gelangt.

Besonders bevorzugt kann die Beleuchtung 18, 19, 20; 18', 19', 20' bzw. die Kamera 15 verschiedener Inspektionsmodule 2, 3, 10 zu unterschiedlichen Zeitpunkten eingeschaltet werden. Dann können Störungen, die beispielsweise durch Reflexionen an der Vorrichtung hervorgerufen werden, reduziert werden. Es könnte beispielsweise vorkommen, dass Licht von der einen Station unbeabsichtigt auf den Kamerasensor einer weiteren Station trifft, sei es direkt oder durch Reflexionen an diversen Maschinenoberflächen, und somit das Bild der weiteren Station beeinträchtigt. Dies wird dadurch vermieden. So wird die Bildaufnahme der einzelnen Stationen 2, 3, 10, die sich potenziell beeinflussen könnten, im Stroboskopmodus so synchronisiert, dass die Bildaufnahme dieser Stationen 2, 3, 10 immer zeitversetzt erfolgt. Somit wird eine störende Einwirkung ausgeschlossen, ohne beispielsweise mechanische Lichtabschirmungen für jede einzelne Station 2, 3, 10 einsetzen zu müssen.

Die Vorrichtung und das Verfahren zur Inspektion von Behältnissen 12 eignet sich insbesondere in der pharmazeutischen Industrie zur Inspektion von in Behältnissen 12 abgefüllten flüssigen oder festen Pharmazeutika. Die Verwendung ist jedoch hierauf nicht eingeschränkt. Auch andere in Behältnissen 12 wie Verpackungsbeuteln, Schlauchbeuteln, Kartons oder ähnliches verpackte Produkte wie beispielsweise Lebensmittel etc. könnten in der beschriebenen Vorrichtung 10 und mit dem beschriebenen Verfahren inspiziert werden.

## Patentansprüche

1. Vorrichtung zur Inspektion von Behältnissen (12), umfassend
zumindest eine Kamera (15) zur optischen Inspektion von zumindest zwei Behältnissen (12), wobei jedes Behältnis (12) eine Behältnisachse (7) aufweist,
zumindest eine Behältnisaufnahme (21) zur mechanischen Aufnahme und Transport der zu inspizierenden Behältnisse (12),
zumindest ein Durchlicht (19) zur Durchleuchtung der zu inspizierenden Behältnisse (12) mit einem Strahlengang in einem Winkel (α) bezogen auf die Behältnisachse (7), wobei die Kamera (15) zumindest ein Bild von den mit Durchlicht (19) durchleuchteten Behältnisse (12) aufnimmt,
wobei zusätzlich zu dem Durchlicht (19) zumindest ein Reflexionslicht (18, 20) zur Beleuchtung der zu inspizierenden Behältnisse (12) vorgesehen ist,
wobei das Reflexionslicht (18,20) so angeordnet ist, dass es mit einem Strahlengang mit einem Winkel (β) bezogen auf die Behältnisachse (7) auf das jeweilige Behältnis (12) auftrifft, der sich von dem Winkel (α) des Durchlichts (19) unterscheidet, **dadurch gekennzeichnet, dass** die Vorrichtung eingerichtet ist, um aus zumindest einem von der Kamera (15) zu einem bestimmten Zeitpunkt (t1, t2, ... tn) aufgenommenem Bild zumindest ein Teilbild, das die Fläche eines ersten Behältnisses (12.1) umfasst, und ein weiteres Teilbild, das die Fläche eines zweiten Behältnisses (12.2) umfasst, zu extrahieren, wobei das Reflexionslicht (18,20) und das Durchlicht (19) so ausgebildet sind, dass zumindest zwei Behältnisse (12.1,12.2) zugleich beleuchtbar sind.

2. Vorrichtung nach Anspruch 1, **dadurch gekennzeichnet, dass** das Reflexionslicht (18, 20) und das Durchlicht (19) zu unterschiedlichen Zeitpunkten (t1 bis Tn) eingeschaltet sind, vorzugsweise abwechselnd.

3. Vorrichtung nach einem der vorhergehenden Ansprüche, **dadurch**
**gekennzeichnet, dass** das Reflexionslicht (18, 20) so angeordnet ist, dass die durch das Reflexionslicht (18,20) beleuchteten Behältnisse (12) die Kamera (15) als ein dunkles Bild erfasst und in diesem Bild ein mögliches Fremdpartikel (13) in den Behältnissen (12) als ein helles Objekt auf dunklem Hintergrund erscheint.

4. Vorrichtung nach einem der vorhergehenden Ansprüche, **dadurch**
**gekennzeichnet, dass** die Kamera (15) zumindest ein Bild aufnimmt zu einem Zeitpunkt (t1, t3, t5), wenn entweder das Durchlicht (19) oder das Reflexionslicht (18,20) eingeschaltet ist.

5. Vorrichtung nach einem der vorhergehenden Ansprüche, **dadurch gekennzeichnet, dass** die Behältnisaufnahme (21) und/oder das Rotationsmittel (9) so ausgebildet ist, dass vor einer Inspektion durch die Kamera (15) die Behältnisse (12) in Rotation versetzt wurden und zum Zeitpunkt der Inspektion abgebremst sind.

6. Vorrichtung nach einem der vorhergehenden Ansprüche, **dadurch**
**gekennzeichnet, dass** zumindest eine weitere Beleuchtung (18', 19', 20'), vorgesehen ist, die zu einem anderen Zeitpunkt eingeschaltet ist als das Reflexionslicht (18, 20) oder das Durchlicht (19).

7. Vorrichtung nach einem der vorhergehenden Ansprüche, **dadurch**
**gekennzeichnet, dass** der Winkel (α) des Durchlichts (19) im Wesentlichen 90° beträgt und/oder der Winkel (β) des Reflexionslichts (18,20) in einem Bereich von 25° bis 50° liegt.

8. Verfahren zur Inspektion von Behältnissen (12), wobei
zumindest eine Kamera (15) zur optischen Inspektion zumindest ein Bild von zumindest zwei Behältnissen (12) aufnimmt, wobei jedes Behältnis (12) eine Behältnisachse (7) aufweist,
wobei zumindest eine Behältnisaufnahme (21) die zu inspizierenden Behältnisse (12) mechanisch aufnimmt und transportiert,
wobei zumindest ein Durchlicht (19) die zu inspizierende Behältnisse (12) mit einem Strahlengang in einem Winkel (α) bezogen auf die Behältnisachse (7) durchleuchtet, wobei die Kamera (15) zumindest ein Bild von den mit Durchlicht (19) durchleuchteten Behältnissen (12) aufnimmt,
wobei zumindest ein Reflexionslicht (18, 20) so angeordnet wird, dass es mit einem Strahlengang mit einem Winkel (β) bezogen auf die Behältnisachse (7) auf das jeweilige Behältnis (12) auftrifft, der sich von dem Winkel (α) des Durchlichts (19) unterscheidet, **dadurch gekennzeichnet, dass** aus zumindest einem von der Kamera (15) zu bestimmten Zeitpunkten (t1, t2, ... tn) aufgenommenem Bild zumindest ein Teilbild, das die Fläche eines ersten Behältnisses (12.1) umfasst, und ein weiteres Teilbild, das die Flächezumindest eines zweiten Behältnisses (12.2) umfasst, extrahiert wird.

9. Verfahren nach dem vorhergehenden Verfahrensanspruch, **dadurch**
**gekennzeichnet, dass** das Reflexionslicht (18, 20) und das Durchlicht (19) zu unterschiedlichen Zeitpunkten (t1 bis tn) eingeschaltet werden, vorzugsweise abwechselnd.

10. Verfahren nach einem der vorhergehenden Verfahrensansprüche, **dadurch gekennzeichnet, dass** die Kamera (15) zumindest ein Bild von zumindest zwei Behältnissen (12.1,12.2) erstellt, zumindest im Durchlicht (19) und zumindest im Auflicht (18, 20).

11. Verfahren nach einem der vorhergehenden Verfahrensansprüche, **dadurch gekennzeichnet, dass** zumindest zwei Behältnisse (12.1,12.2) in ein Gesichtsfeld (17) der Kamera (15) bewegt werden, dass die Behältnisse (12.1,12.2) entweder mit Durchlicht (19) oder mit Reflexionslicht (18,20) beleuchtet werden, und dass die Kamera (15) zumindest ein Bild der beleuchteten Behältnisse (12.1,12.2) aufnimmt.

12. Verfahren nach einem der vorhergehenden Verfahrensansprüche, **dadurch gekennzeichnet, dass** die Behältnisse (12.1,12.2) weiter bewegt werden und mit Reflexionslicht (18,20) und/oder Durchlicht (19) beleuchtet werden und die Kamera (15) zumindest ein weiteres Bild aufnimmt.

## Claims

1. Device for inspecting containers (12), the device comprising
at least one camera (15) for visually inspecting at least two containers (12), wherein each container (12) has a container axis (7),
at least one container receptacle (21) for mechanically receiving and transporting the containers (12) to be inspected,
at least one transmitted light (19) for transilluminating the containers (12) to be inspected with a beam path at an angle (α) relative to the container axis (7), wherein the camera (15) records at least one image of the containers (12) transilluminated by transmitted light (19),
wherein, in addition to the transmitted light (19), at least one reflected light (18, 20) is provided for illuminating the containers (12) to be inspected,
wherein the reflected light (18, 20) is positioned such that a beam path thereof impinges on the relevant container (12) at an angle (β), relative to the container axis (7), which differs from the angle (α) of the transmitted light (19), **characterized in that** the device is configured to extract at least one partial image comprising the surface of a first container (12.1) and a further partial image comprising the surface of a second container (12.2) from at least one image recorded by the camera (15) at a specified time (t1, t2, ... tn), wherein the reflected light (18, 20) and the transmitted light (19) are configured such that at least two containers (12.1, 12.2) can be illuminated simultaneously.

2. Device according to claim 1, **characterized in that** the reflected light (18, 20) and the transmitted light (19) are switched on at different times (t1 to Tn), preferably alternately.

3. Device according to any of the preceding claims, **characterized in that** the reflected light (18, 20) is positioned such that the containers (12) illuminated by the reflected light (18, 20) are captured by the camera (15) as a dark image and, in this image, a possible foreign particle (13) in the containers (12) appears as a bright object on a dark background.

4. Device according to any of the preceding claims, **characterized in that** the camera (15) records at least one image at one time (t1, t3, t5) when either the transmitted light (19) or the reflected light (18, 20) is switched on.

5. Device according to any of the preceding claims, **characterized in that** the container receptacle (21) and/or the rotation means (9) is designed such that the containers (12) were set in rotation prior to an inspection by the camera (15) and are slowed down at the time of the inspection.

6. Device according to any of the preceding claims, **characterized in that** at least one further illumination (18', 19', 20') is provided, which is switched on at a different time from the reflected light (18, 20) or the transmitted light (19).

7. Device according to any of the preceding claims, **characterized in that** the angle (α) of the transmitted light (19) is substantially 90° and/or the angle (β) of the reflected light (18, 20) is in a range of 25° to 50°.

8. Method for inspecting containers (12), wherein
at least one camera (15) for visual inspection records at least one image of at least two containers (12), wherein each container (12) has a container axis (7),
wherein at least one container receptacle (21) mechanically receives and transports the containers (12) to be inspected,
wherein at least one transmitted light (19) transilluminates the containers (12) to be inspected with a beam path at an angle (α) relative to the container axis (7), wherein the camera (15) records at least one image of the containers (12) transilluminated by transmitted light (19),
wherein at least one reflected light (18, 20) is positioned such that a beam path thereof impinges on the relevant container (12) at an angle (β), relative to the container axis (7), which differs from the angle (α) of the transmitted light (19), **characterized in that** at least one partial image comprising the surface of a first container (12.1) and a further partial image comprising the surface of at least one second container (12.2) are extracted from at least one image recorded by the camera (15) at specified times (t1, t2, ... tn).

9. Method according to the preceding method claim, **characterized in that** the reflected light (18, 20) and the transmitted light (19) are switched on at different times (t1 to tn), preferably alternately.

10. Method according to any of the preceding method claims,
**characterized in that** the camera (15) produces at least one image of at least two containers (12.1, 12.2), at least in transmitted light (19) and at least in incident light (18, 20).

11. Method according to any of the preceding method claims,
**characterized in that** at least two containers (12.1, 12.2) are moved into a field of view (17) of the camera (15), **in that** the containers (12.1, 12.2) are illuminated either by transmitted light (19) or by reflected light (18, 20), **and in that** the camera (15) records at least one image of the illuminated containers (12.1, 12.2).

12. Method according to any of the preceding method claims,
**characterized in that** the containers (12.1, 12.2) are moved further and are illuminated with reflected light (18, 20) and/or transmitted light (19) and the camera (15) records at least one further image.

## Revendications

1. Dispositif permettant l'inspection de récipients (12), comprenant
au moins une caméra (15) pour l'inspection optique d'au moins deux récipients (12), dans lequel chaque récipient (12) présente un axe de récipient (7),
au moins un réceptacle pour récipient (21) pour la réception et le transport mécaniques des récipients (12) à inspecter,
au moins une lumière transmise (19) permettant l'éclairage par transmission des récipients (12) à inspecter avec une trajectoire de faisceau à un angle (α) par rapport à l'axe de récipient (7), dans lequel la caméra (15) enregistre au moins une image des récipients (12) éclairés par transmission par la lumière transmise (19),
dans lequel, outre la lumière transmise (19), au moins une lumière réfléchie (18, 20) permettant l'éclairage des récipients (12) à inspecter est prévue,
dans lequel la lumière réfléchie (18, 20) est disposée de sorte qu'elle heurte le récipient (12) respectif avec une trajectoire de faisceau à un angle (β) par rapport à l'axe de récipient (7) qui est différent de l'angle (α) de la lumière transmise (19), **caractérisé en ce que** le dispositif est configuré pour extraire, à partir d'au moins une image enregistrée par la caméra (15) à un moment (t1, t2, ... tn) déterminé, au moins une image partielle comprenant la surface d'un premier récipient (12.1) et une autre image partielle comprenant la surface d'un second récipient (12.2), dans lequel la lumière réfléchie (18, 20) et la lumière transmise (19) sont réalisées de sorte qu'au moins deux récipients (12.1, 12.2) peuvent être éclairés simultanément.

2. Dispositif selon la revendication 1, **caractérisé en ce que** la lumière réfléchie (18, 20) et la lumière transmise (19) sont allumées à des moments (t1 à Tn) différents, de préférence en alternance.

3. Dispositif selon l'une des revendications précédentes,
**caractérisé en ce que** la lumière réfléchie (18, 20) est disposée de sorte que les récipients (12) éclairés par la lumière réfléchie (18, 20) sont détectés par la caméra (15) sous la forme d'une image sombre et, dans ladite image, une éventuelle particule étrangère (13) dans les récipients (12) apparaît comme un objet clair sur un fond sombre.

4. Dispositif selon l'une des revendications précédentes,
**caractérisé en ce que** la caméra (15) enregistre au moins une image à un moment (t1, t3, t5) où soit la lumière transmise (19), soit la lumière réfléchie (18, 20), est allumée.

5. Dispositif selon l'une des revendications précédentes,
**caractérisé en ce que** le réceptacle pour récipient (21) et/ou le moyen de rotation (9) sont réalisés de sorte qu'avant une inspection par la caméra (15), les récipients (12) ont été mis en rotation et sont ralentis au moment de l'inspection.

6. Dispositif selon l'une des revendications précédentes,
**caractérisé en ce qu'au** moins un autre éclairage (18', 19', 20') est prévu, lequel est allumé à un autre moment que la lumière réfléchie (18, 20) ou que la lumière transmise (19).

7. Dispositif selon l'une des revendications précédentes,
**caractérisé en ce que** l'angle (α) de la lumière transmise (19) est sensiblement de 90° et/ou l'angle (β) de la lumière réfléchie (18, 20) est compris dans une plage allant de 25° à 50°.

8. Procédé permettant l'inspection de récipients (12), dans lequel
au moins une caméra (15) pour l'inspection optique enregistre au moins une image d'au moins deux récipients (12), dans lequel chaque récipient (12) présente un axe de récipient (7),
dans lequel au moins un réceptacle pour récipient (21) reçoit et transporte mécaniquement les récipients (12) à inspecter,
dans lequel au moins une lumière transmise (19) éclaire par transmission des récipients (12) à inspecter avec une trajectoire de faisceau à un angle (α) par rapport à l'axe de récipient (7), dans lequel la caméra (15) enregistre au moins une image des récipients (12) éclairés par transmission par la lumière transmise (19),
dans lequel au moins une lumière réfléchie (18, 20) est disposée de sorte qu'elle heurte le récipient (12) respectif avec une trajectoire de faisceau à un angle (β) par rapport à l'axe de récipient (7) qui est différent de l'angle (α) de la lumière transmise (19), **caractérisé en ce que,** à partir d'au moins une image enregistrée par la caméra (15) à des moments (t1, t2, ... tn) déterminés, au moins une image partielle comprenant la surface d'un premier récipient (12.1) et une autre image partielle comprenant la surface d'au moins un second récipient (12.2) sont extraites.

9. Procédé selon la revendication de procédé précédente,
**caractérisé en ce que** la lumière réfléchie (18, 20) et la lumière transmise (19) sont allumées à des moments (t1 à tn) différents, de préférence en alternance.

10. Procédé selon l'une des revendications de procédé précédentes,
**caractérisé en ce que** la caméra (15) crée au moins une image d'au moins deux récipients (12.1, 12.2), au moins dans la lumière transmise (19) et au moins dans la lumière incidente (18, 20).

11. Procédé selon l'une des revendications de procédé précédentes,
**caractérisé en ce qu'au** moins deux récipients (12.1, 12.2) sont déplacés dans un champ visuel (17) de la caméra (15), **en ce que** les récipients (12.1, 12.2) sont éclairés soit par une lumière transmise (19), soit par une lumière réfléchie (18, 20), **et en ce que** la caméra (15) enregistre au moins une image des récipients (12.1, 12.2) éclairés.

12. Procédé selon l'une des revendications de procédé précédentes,
**caractérisé en ce que** les récipients (12.1, 12.2) continuent d'être déplacés et d'être éclairés par une lumière réfléchie (18, 20) et/ou par une lumière transmise (19) et la caméra (15) enregistre au moins une autre image.
